(19) Europäisches Patentamt

European Patent Office

Office européen des brevets

(11) **EP 1 513 141 A2**

(12) **EUROPEAN PATENT APPLICATION**

(43) Date of publication:
**09.03.2005 Bulletin 2005/10**

(51) Int Cl.7: **G11B 7/085**, G11B 7/09,
G11B 7/22, G11B 7/12,
G11B 7/135

(21) Application number: **04292130.4**

(22) Date of filing: **03.09.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **04.09.2003 JP 2003312921
04.09.2003 JP 2003312655
04.09.2003 JP 2003312397**

(71) Applicant: **SONY CORPORATION
Tokyo (JP)**

(72) Inventor: **Kanazawa Takakiyo
c/o Sony Corporation
Shinagawa-ku, Tokyo (JP)**

(74) Representative: **Thévenet, Jean-Bruno et al
Cabinet Beau de Loménie
158, rue de l'Université
75340 Paris Cédex 07 (FR)**

(54) **Optical pickup apparatus, optical disk apparatus and optical pickup adjustment method**

(57) An optical pickup apparatus is disclosed which can be formed in a minimized thickness while realizing improvement in focusing servo performance, improvement in heat radiation, reduction of the voltage, reduction in number of parts, and reduction of the cost. A swing arm having an optical pickup includes an optical pickup base plate (22) formed from a thin plate member of an iron alloy or a copper alloy, and a hole perforated in the optical pickup base plate (22) is closed up from the opposite sides with a silicon substrate and a glass cover (16) to form an enclosed space. An integrated optical pickup unit (17) including a semiconductor laser (27) and an optical system integrated on the silicon substrate is disposed in the enclosed space.

FIG. 8

**Description**

BACKGROUND OF THE INVENTION

This invention relates to an optical pickup apparatus, an optical disk apparatus and an optical pickup adjustment method for recording or reproducing an information signal on or from various optical disks.

In recent years, reduction in thickness of optical disk drives has proceeded and is proceeding, and at present, a disk drive of approximately 10 mm thick is available as a commodity. The most serious obstacle to reduction in thickness of an optical disk drive is the thickness of an optical pickup which is a key device to the optical disk drive.

Accordingly, reduction in thickness of the optical pickup is a key to production of an optical disk drive of a further reduced thickness. Recently, an optical pickup of a novel structure has been proposed in order to implement an optical disk drive of a reduced thickness such as, for example, 5 mm thick.

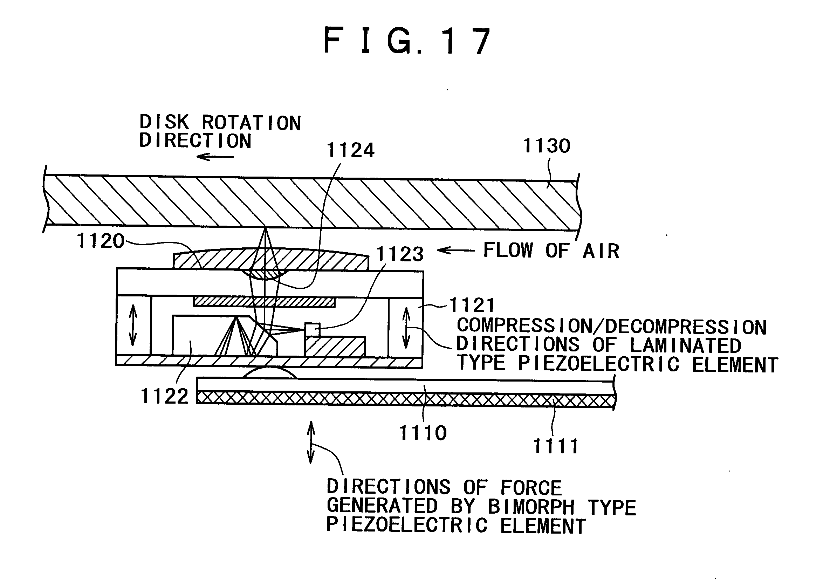

FIG. 17 schematically shows a cross section of a typical one of related-art optical pickups. The optical pickup is disclosed in Japanese Patent Laid-Open No. 2003-233921.

Referring to FIG. 17, the optical pickup shown is formed as one package wherein an entire optical system is integrated in a floating slider 1120 supported on a load beam 1110 including a bimorph type piezoelectric element 1111. The floating slider 1120 has a laminated piezoelectric element 1121 provided on an outer periphery thereof and includes an integrated optical system 1122, a semiconductor laser element 1123 and so forth disposed within the space surrounded by the laminated piezoelectric element 1121. Further, an objective lens 1124 opposing to an optical disk 1130 is disposed above the integrated optical system 1122, semiconductor laser element 1123 and so forth. In the floating slider 1120, the distance between the integrated optical system 1122 and the objective lens 1124 is changed by the laminated piezoelectric element 1121 to perform a focusing servo operation. Further, the load pressure to be applied to the floating slider 1120 can be controlled by the bimorph type piezoelectric element 1111 provided on the load beam 1110 to change the floating amount of the floating slider 1120 to perform a focusing servo operation.

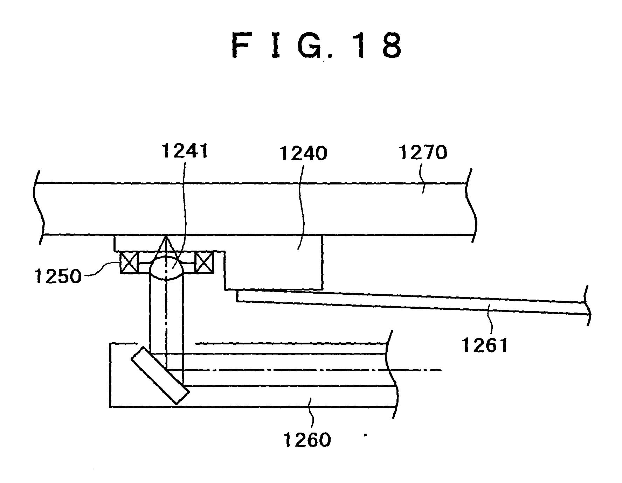

FIG. 18 shows a cross section of another typical one of related-art optical pickups.

Referring to FIG. 18, the optical pickup shown includes a floating slider 1240 disposed above an optical pickup body 1260 by means of a suspension 1261 and an MEMS (micro-electro-mechanical system) actuator 1250 for driving an objective lens 1241 provided on the floating slider 1240 to perform a focusing servo operation for an optical disk 1270.

However, for example, in the optical pickup shown in FIG. 17, since the movable stroke of the focus is small, the range of driving movement in the focusing servo operation is restricted. Usually, the stroke of the laminated piezoelectric element 1121 is approximately 2 to 3 μm or less to the greatest where the laminated piezoelectric element 1121 is used for a thin portion such as the floating slider 1120. Also the focusing servo operation by the load beam 1110 is restricted by the floating amount, and therefore, it is estimated that the stroke is approximately ±1 μm or less. Further, in order to drive a piezoelectric element, a voltage of approximately 30 to 100 V is required. However, since optical disk drives usually use 12 V or 5 V driving, a DC-DC converter for exclusive use must be provided. Also the cost of the piezoelectric element itself is high.

Meanwhile, in the optical pickup shown in FIG. 18, since usually the driving force of the MEMS actuator 1250 is low, a sufficient acceleration cannot be obtained to drive the objective lens 1241. Further, since the stroke of movement of the objective lens 1241 is small, the correction amount for an out-of focus state is approximately 2 to 3 μm or less similarly as in the example described above. Further, since a sufficient acceleration cannot be obtained, a focusing servo operation in a high frequency band cannot be performed. Furthermore, the MEMS still requires a high cost as a driving element for an actuator.

Incidentally, in such related-art optical pickups as described above, it is necessary to perform various adjustments and inspections for an integrated optical pickup unit at an assembly inspection step for an optical disk apparatus, and it is necessary to input signals for such adjustments to the optical pickup from the outside of the optical disk apparatus.

Naturally, also upon normal operation, it is necessary to transmit necessary signals (including driving power supply, a data signal and so forth) between the optical pickup and a control circuit (driver body) of the body of the optical disk apparatus.

Therefore, it is necessary to lay various signal lines between the optical pickup and internal circuits and external terminals of the optical disk apparatus, and preferably, signal lines to be used for normal operation and signal lines to be used only for adjustments can be handled separately from each other from the point of view of the efficiency in connection operation or adjustment operation and so forth.

SUMMARY OF THE INVENTION

It is an object of the present invention to provide an optical pickup apparatus and an optical disk apparatus which can be formed in a minimized thickness while realizing improvement in focusing servo performance, reduction of the voltage and reduction of the cost.

It is another object of the present invention to provide an optical disk apparatus and an optical pickup adjustment method for the optical disk apparatus wherein a connection operation and a wiring operation of signal lines for normal operation and signal lines only for adjustment of an optical pickup can be performed appropriately and readily and besides assembly and adjustment can be performed easily without an error.

In order to attain the objects described above, according to an aspect of the present invention, there is provided an optical pickup apparatus including an integrated optical pickup unit for recording or reproducing a signal on or from an optical disk, the integrated optical pickup unit including a semiconductor laser for emitting a light beam and an optical system for introducing the light beam, and a swing arm unit for supporting the integrated optical pickup unit, the swing arm unit including an optical pickup base plate formed from a thin metal plate having a hole for arrangement of the integrated optical pickup unit formed at an end portion thereof, a semiconductor substrate having the integrated optical pickup unit mounted thereon and mounted on one of faces of the optical pickup base plate to close up the hole of the optical pickup base plate, and a transparent cover mounted on the other face of the optical pickup base plate to close up the hole, the integrated optical pickup unit on the semiconductor substrate being disposed in a space formed in the hole of the optical pickup base plate closed up with the semiconductor substrate and the transparent cover.

According to another aspect of the present invention, there is provided an optical disk apparatus including an optical disk driving unit for holding and driving an optical disk to rotate, an integrated optical pickup unit for recording or reproducing a signal on or from the optical disk, the integrated optical pickup unit including a semiconductor laser for emitting a light beam and an optical system for introducing the light beam, and a swing arm unit for supporting the integrated optical pickup unit, the swing arm unit including an optical pickup base plate formed from a thin metal plate having a hole for arrangement of the integrated optical pickup unit formed at an end portion thereof, a semiconductor substrate having the integrated optical pickup unit mounted thereon and mounted on one of faces of the optical pickup base plate to close up the hole of the optical pickup base plate, and a transparent cover mounted on the other face of the optical pickup base plate to close up the hole, the integrated optical pickup unit on the semiconductor substrate being disposed in a space formed in the hole of the optical pickup base plate closed up with the semiconductor substrate and the transparent cover.

With the optical pickup apparatus and the optical disk apparatus, since the hole formed in the optical pickup base plate of the swing arm unit is closed up with the semiconductor substrate on which the integrated optical pickup unit is mounted and the transparent cover, and the integrated optical pickup unit is disposed in the closed up space formed in the hole. Consequently, reduction in thickness of the optical pickup can be anticipated. Further, the optical pickup base plate functions as a heat radiating plate, and consequently, improvement in heat radiation from the semiconductor laser can be anticipated. Further, the configuration is simple, and consequently, reduction in number of parts and in cost can be anticipated.

According to a further aspect of the present invention, there is provided an optical disk apparatus including an optical pickup for illuminating a light beam upon an optical disk to record or reproduce a signal on or from the optical disk, and a swing arm unit for supporting the optical pickup, the swing arm unit including an optical pickup base plate for holding an integrated optical pickup unit including a semiconductor laser and an optical system, a plate-like support spring disposed in parallel to and along a face of the optical pickup base plate adjacent the optical disk, and a suspension disposed in parallel to and along a face of the support spring adjacent the optical disk, the integrated optical pickup unit including a concave lens for increasing the diversion angle of the laser beam emitted from the optical pickup, the support spring including a collimator lens for converting the laser beam from the concave lens into parallel light, the suspension including a floating slider in which an objective lens for condensing the laser light from the collimator lens on the optical disk is incorporated.

With the optical disk apparatus, the support spring and the suspension are provided in parallel to the optical pickup base plate on which the integrated optical pickup unit is held, and the concave lens for increasing the diversion angle of the laser beam emitted from the optical pickup is provided on the integrated optical pickup unit. Further, the collimator lens for converting the light from the concave lens into parallel light is provided on the support spring, and the floating slider in which the object lens is incorporated is provided on the suspension. Consequently, the collimator lens can be displaced freely, and the distance for correction of the focus and the acceleration in the focusing servo can be increased. Further, the configuration is simple, and consequently, reduction in number of parts and in cost can be anticipated.

According to a still further aspect of the present invention, there is provided an optical disk apparatus including an optical pickup for illuminating a light beam upon an optical disk to record or reproduce a signal on or from the optical disk, a moving unit for moving the optical pickup along a signal recording face of the optical disk, and a flexible substrate for supplying a signal to the optical pickup, the flexible substrate having a wiring pattern wherein signal lines necessary for operation of the optical pickup and signal lines necessary only for adjustment of the optical pickup are disposed separately from each other.

With the optical disk apparatus, the wiring pattern wherein the signal lines necessary for operation of the

EP 1 513 141 A2

optical pickup and the signal lines necessary only for adjustment of the optical pickup are disposed separately from each other is provided on the flexible substrate for supplying a signal to the optical pickup. Consequently, the signal lines necessary for normal operation of the optical pickup and the signal lines necessary only for adjustment of the optical pickup can be handled readily and appropriately and separately from each other. Consequently, assembly and adjustment of the optical disk apparatus are facilitated, and also an error in working can be prevented effectively.

According to a yet further aspect of the present invention, there is provided an optical pickup adjustment method for an optical disk apparatus which includes an optical pickup for illuminating a light beam upon an optical disk to record or reproduce a signal on or from the optical disk, a moving unit for moving the optical pickup along a signal recording face of the optical disk, and a flexible substrate for supplying a signal to the optical pickup, the optical pickup adjustment method including the steps of providing, on the flexible substrate, a wiring pattern wherein signal lines necessary for operation of the optical pickup and signal lines necessary only for adjustment of the optical pickup are disposed separately from each other, using the signal lines provided on the flexible substrate and necessary only for adjustment of the optical pickup to transmit signals for adjustment to perform attachment adjustment of the optical pickup, and cutting the wiring pattern of the signal lines necessary only for adjustment of the optical pickup after completion of the adjustment of the optical pickup.

With the optical pickup adjustment method, the signal lines provided on the flexible substrate and necessary only for adjustment of the optical pickup are used to transmit signals for adjustment to perform adjustment of the optical pickup, and the wiring pattern of the signal lines necessary only for adjustment of the optical pickup is cut after completion of the adjustment of the optical pickup, whereafter assembly of the optical disk apparatus is performed. Thus, after completion of the adjustment of the optical pickup, the signal lines only for adjustment are removed to eliminate those wiring lines which are useless for ordinary operation of the optical disk apparatus. Consequently, the number of leads from the optical pickup can be reduced and an increased space can be provided in the optical disk apparatus. Also arrangement of parts is facilitated, and facilitation in assembly and compact configuration of the apparatus can be anticipated.

The above and other objects, features and advantages of the present invention will become apparent from the following description and the appended claims, taken in conjunction with the accompanying drawings in which like parts or elements denoted by like reference symbols.

BRIEF DESCRIPTION OF THE DRAWINGS

FIG. 1 is a perspective view showing a general configuration of an optical disk drive in which an optical pickup according to an embodiment of the present invention is incorporated;

FIG. 2 is a perspective view showing a general configuration of a swing arm unit of the optical pickup shown in FIG. 1;

FIG. 3 is an exploded perspective view showing component units of the swing arm unit shown in FIG. 2 as viewed from above;

FIG. 4 is a similar view but showing the component units of the swing arm unit shown in FIG. 2 as viewed from below;

FIG. 5 is an exploded perspective view showing details of an optical pickup base section of the optical pickup shown in FIG. 1;

FIG. 6 is an exploded perspective view showing a configuration of a collimator lens actuator section of the optical pickup shown in FIG. 1;

FIG. 7 is a perspective view showing a configuration of a slider suspension section of the optical pickup shown in FIG. 1;

FIG. 8 is a diagrammatic view illustrating a principle of an optical system used in the optical pickup shown in FIG. 1;

FIGS. 9A to 9D are schematic sectional views illustrating a method of producing a small-size lens used in the optical pickup shown in FIG. 1;

FIG. 10 is a schematic view showing a light receiving region pattern of a photo-detector used in the optical pickup shown in FIG. 1;

FIG. 11 is a schematic view illustrating variations of the shape of a spot on the photo-detector shown in FIG. 10 when an azimuth angle appears;

FIGS. 12A and 12B are diagrammatic views illustrating degradation of a tracking error by appearance of an azimuth angle;

FIG. 13 is a diagrammatic view showing signal waveforms when the degradation of the tracking error by appearance of an azimuth angle is canceled using a correction filter;

FIGS. 14A and 14B are schematic views illustrating a difference in action depending upon whether a relief hole provided in a suspension load beam is present or absent;

FIGS. 15A to 15C are plan views showing a hinge spring used in the optical pickup shown in FIG. 1 in comparison with related-art hinge springs;

FIGS. 16A to 16C are schematic views illustrating a principle of a collimator lens actuator used in the optical pickup shown in FIG. 1;

FIG. 17 is a schematic sectional view showing an example of a related-art optical pickup; and

FIG. 18 is a schematic sectional view showing another example of a related-art optical pickup.


DETAILED DESCRIPTION OF THE PREFERRED EMBODIMENT

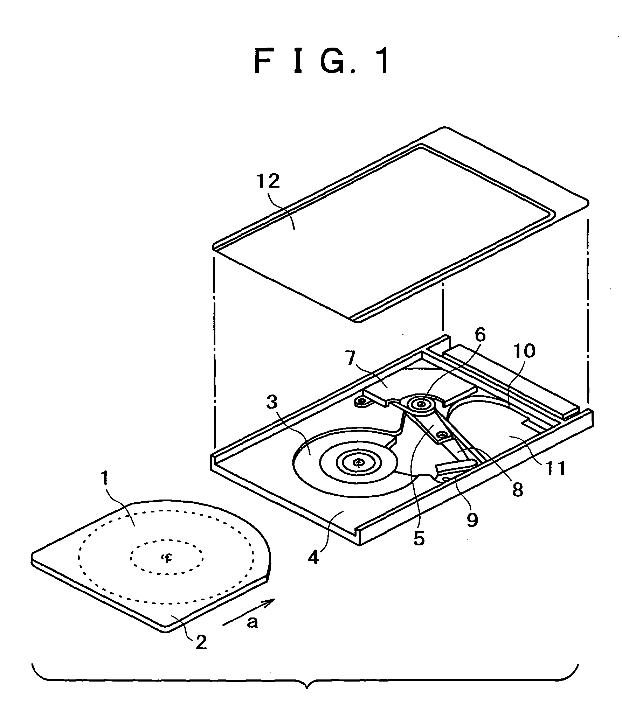

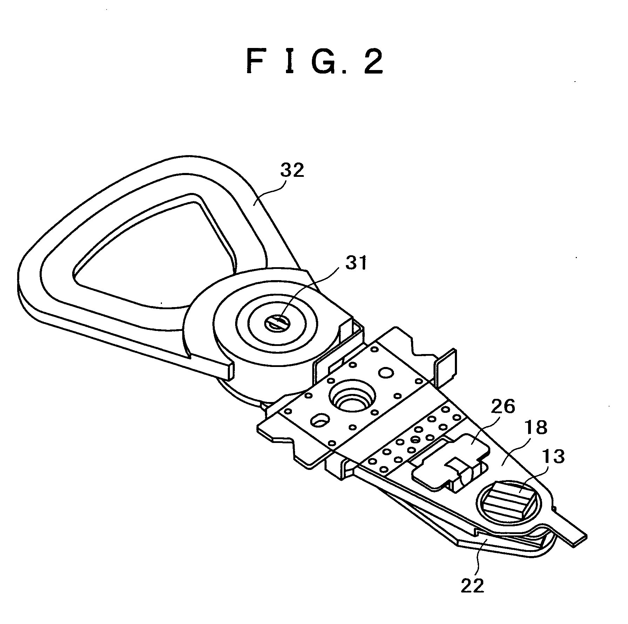

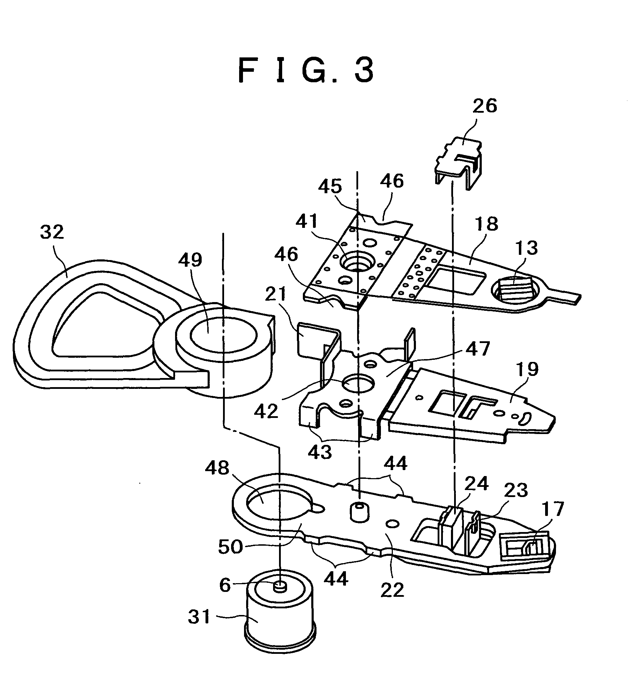

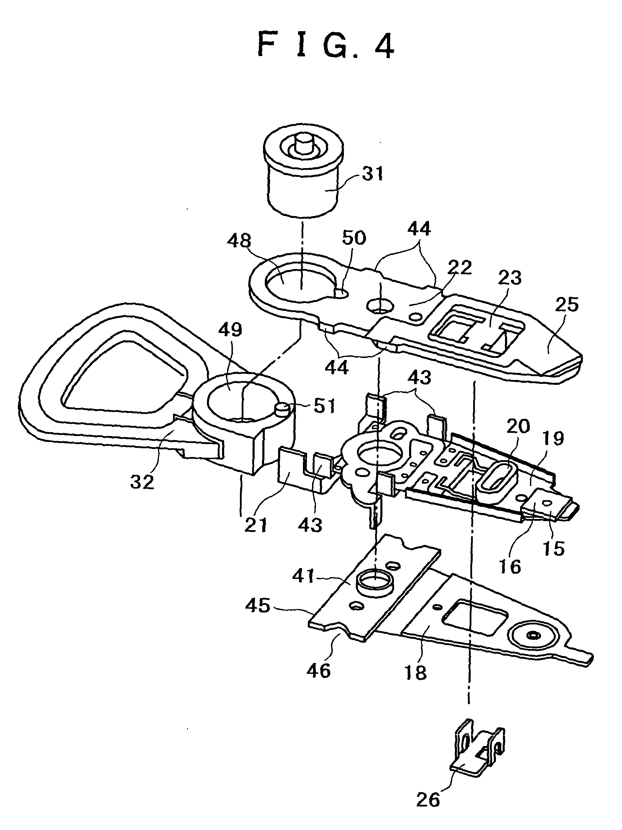

FIG. 1 is a perspective view showing a general configuration of an optical disk drive (optical disk apparatus) according to an embodiment of the present invention; FIG. 2 is a perspective view showing a general configuration of a swing arm unit of the optical pickup shown in FIG. 1; FIG. 3 is an exploded perspective view showing component units of the swing arm unit shown in FIG. 2 as viewed from above; and FIG. 4 is a similar view but showing the component units of the swing arm unit shown in FIG. 2 as viewed from below.

Referring to FIGS. 1 to 4, an optical pickup shown is an example of an optical disk drive formed such that an optical disk of a size of 85.6 mm long × 54 mm wide × 5 mm thick (for example, the type 2 size of the PCMCIA) can be exchangeably loaded. In FIG. 1, the optical pickup is shown with a top cover 12 removed.

An iron piece in the form of a disk having a hole perforated therein is adhered to a central portion of an optical disk 1 so that the iron piece may be used for positioning of the optical disk 1 with respect to a spindle motor shaft or for attraction by magnetic form. The optical disk 1 is usually kept and used in a state wherein it is accommodated in a cartridge 2. A shutter is attached for opening and closing movement to a lower face of the cartridge 2 such that, when the cartridge 2 is loaded into the drive, the shutter is opened, and after the cartridge 2 is loaded, an optical pickup 8 performs reading and writing of information from and to the optical disk 1 through the opening. The optical disk 1 is inserted in the direction indicated by an arrow mark a in FIG. 1 into the inside of the drive and then chucked to a spindle motor 3 by magnetic force. Then, the optical disk 1 is rotated by the spindle motor 3 and used.

The spindle motor 3 is secured to a chassis 4. A bearing shaft 6 is fastened perpendicularly to the chassis 4 by means of a screw. Two bearings are attached to and cooperated with the bearing shaft 6 to form a bearing unit 31. A swing arm unit 5 is attached for swinging motion around the bearing shaft 6 through the bearing unit 31. A coil is attached to one end of the swing arm unit 5 and forms a voice coil motor together with a magnetic circuit 7 provided by a magnet. The swing arm unit 5 receives driving force in a rotational direction by the voice coil motor. The optical pickup 8 according to an embodiment of the present invention is formed at the other end of the swing arm unit 5. The optical pickup 8 can access inner and outer circumferences of the optical disk 1 by swinging motion of the swing arm unit 5.

A floating slider hereinafter described is attached to the optical pickup 8 and is normally acted upon by spring force (5 gf or less) upwardly by a suspension spring so that it normally tends to be pressed against the surface of the optical disk 1. When no disk is loaded in the drive or when the spindle motor 3 is inactive, the optical pickup 8 stands by at a position on the outer side with respect to the outer periphery of the optical disk 1 as seen in FIG. 1. Thereupon, the suspension of the optical pickup 8 is controlled to have a predetermined position in the heightwise direction by a spring retainer 9. The configuration of the optical pickup 8 is hereinafter described in detail. The optical pickup 8 is electrically connected to an electric circuit board 11 provided on a lower face of the chassis 4 through a flexible substrate 10. Transmission of a signal to and from the optical pickup 8 and driving of the voice coil motor are performed through the flexible substrate 10.

The optical pickup 8 is generally composed of three units including an optical pickup base section including an optical pickup base plate 22 and an integrated optical pickup unit 17, a collimator lens actuator section including a support spring 19, a driving coil 20 and a collimator lens 15, and a slider suspension section including a floating slider 13 with an objective lens and a suspension 18.

Here, the component units mentioned are described in detail.

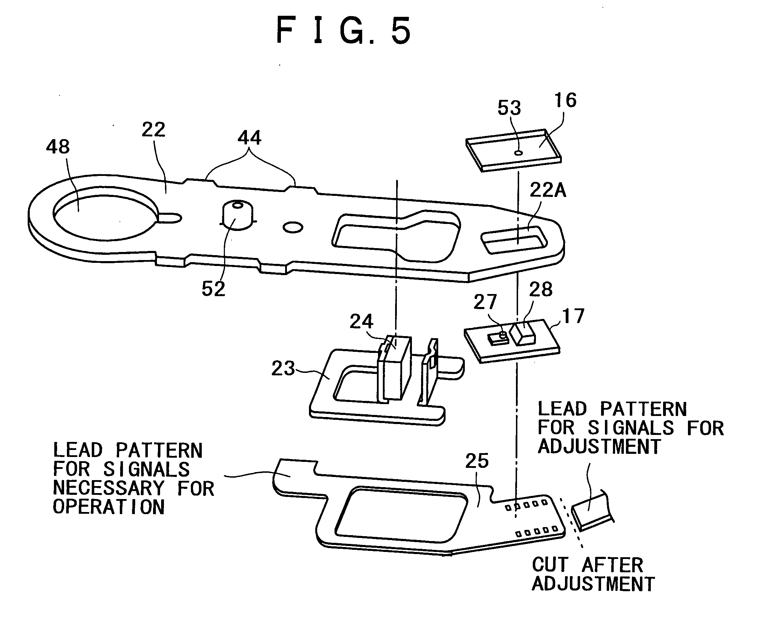

FIG. 5 shows details of the optical pickup base section. Referring to FIG. 5, the optical pickup base section includes several parts attached to the optical pickup base plate 22.

The optical pickup base plate 22 is a metal plate of a thickness equal to or less than 1 mm made of an iron type or copper type alloy and having a plated layer of copper (where an iron type material is used) or solder to which solder sticks well. This is because, although detailed description is hereinafter given, fixation of the integrated optical pickup unit 17, fixation to the collimator actuator section and fixation to a magnet yoke are performed by soldering.

Further, this is because, although this is hereinafter described, by controlling the plated layer thickness of the optical pickup base plate 22, the distance between optical parts (the integrated optical pickup unit 17 and a glass cover 16 with a concave lens) can be managed on the order of micron.

Referring to FIG. 5, the glass cover 16 with a concave lens and the integrated optical pickup unit 17 are individually attached fixedly to a quadrangular hole 22A at the right end of the optical pickup base plate 22 in FIG. 5 such that the optical pickup base plate 22 may be sandwiched between them. The glass cover 16 with a concave lens is a glass plate of approximately 3 mm wide × 4 mm long × 0.3 mm thick, and a concave lens 53 produced by a method hereinafter described is formed substantially at a central portion of the glass cover 16. In the present embodiment, the concave lens 53 has a diameter of approximately 0.3 mm.

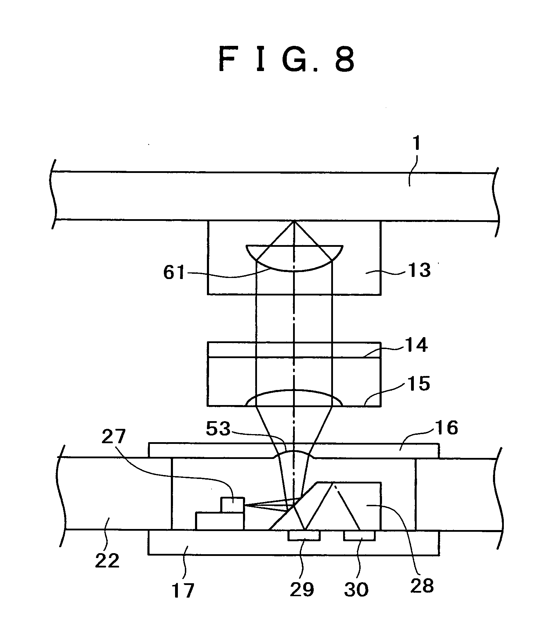

Referring also to FIG. 8, the integrated optical pickup unit 17 includes a semiconductor laser 27 and a beam splitter (BS) 28 mounted on a silicon substrate on which photo-detectors (PD) 29 and 30 and an electric circuit are formed in advance. In the present embodiment, the silicon substrate has a size of approximately 3 mm wide × 4 mm long × 0.3 mm thick. This is sold also as a commodity for an optical pickup for a CD or a DVD and is similar to that called laser coupler.

It is to be noted that an ordinary laser coupler is surrounded by an outer casing package made of a ceramic material around the integrated optical pickup unit 17. Such an outer casing package has only such objects as good convenience in use and protection but also such objects as to prevent admission of foreign articles and prevention, by encapsulation of inert gas, of corrosion of the semiconductor laser 27. In the present embodiment, the roles of the outer casing package are partly taken charge of by the optical pickup base plate 22.

Since the glass cover 16 with a concave lens and the integrated optical pickup unit 17 are fitted from above and below into the quadrangular hole 22A of the optical pickup base plate 22 such that the optical pickup base plate 22 is sandwiched between them, an enclosed space is produced. By enclosing inert gas in the space, also admission of foreign articles and corrosion of the semiconductor laser 27 can be prevented. The integrated optical pickup unit 17 is fixedly attached to the optical pickup base plate 22 by soldering. Thereafter, the position of the glass cover 16 with a concave lens is adjusted in the inert gas and then adhered fixedly to the optical pickup base plate 22. Thereupon, the glass cover 16 with a concave lens is adjusted so that the concave lens 53 may be aligned with an optical axis of a laser beam emitted from the integrated optical pickup unit 17.

To the integrated optical pickup unit 17 and the concave lens 53, also the accuracy in distance between them is a significant factor, and an accuracy of approximately several to 10 μm is required although it depends upon the optical system. This accuracy is a value which cannot be achieved only with the accuracy in thickness of a metal plate. As described hereinabove, this accuracy is achieved by controlling the thickness of the plated layer on the optical pickup base plate 22.

The optical system base section is driven to rotate around a hole 48 at the left end of FIG. 5 when it is used. The integrated optical pickup unit 17 is disposed in an inclined relationship with respect to an axis of a radial direction centered at the hole 48. Although detailed description is hereinafter given, the optical pickup in the present embodiment is of the swing arm type and produces an azimuth angle with respect to a recording track when it accesses an inner or outer circumference of a disk. If an azimuth angle is produced, then the sensitivity of the tracking error signal is deteriorated. Therefore, in order to minimize the deterioration, the integrated optical pickup unit 17 is disposed with an angle so that the azimuth angle may be substantially equal to zero substantially at the center of the access area. It is to be noted that a method of producing the lens used in the present embodiment and the optical system are hereinafter described.

A flexible substrate 25 is attached to the integrated optical pickup unit 17. A land portion (conductor exposing portion) is provided on the flexible substrate 25 so that electric connection is established when it is pressed directly against electric terminals led out to the rear face of the silicon substrate. The integrated optical pickup unit 17 has electric connection to the electric circuit board 11 established by the flexible substrate 25.

As seen in FIG. 5, the flexible substrate 25 leads out signals from the integrated optical pickup unit 17 in two separate groups. In particular, the signals in one group are used only for adjustment in optical position upon assembly of the optical pickup, and the signals in the other group are used necessary for actual operation of the optical pickup. As seen in FIG. 5, the lines which are used only for adjustment are cut off after the adjustment. Consequently, the swing arm unit is driven without dragging of the unnecessary pattern. It is to be noted that, since dragging of the flexible substrate 10 applies unnecessary torque to the swing arm unit 5, the unnecessary torque can be reduced by cutting out the unnecessary lead out portion as described above. Further, since the unnecessary signal line portions are eliminated, the individual necessary signal lines can be formed with an increased width as much. The elimination of the excessive signal lines provides a further merit that electrically unnecessary noise is not picked up.

Also a driving magnetic circuit of the collimator lens actuator section hereinafter described is attached to the optical pickup base plate 22. Since the collimator lens actuator section is attached at an adjusted position, after the adjustment in position is completed, also the magnetic circuit is adjusted in position in accordance with the position of the driving coil 20 and then fixed. The magnetic circuit is formed from a magnet 24 and a magnet yoke 23. The magnet 24 is magnetized such that it has the magnetic poles on the front and rear thereof. Magnetic fluxes from the magnet 24 pass through an air gap and pass through the opposing magnet yoke 23 to form a closed magnetic path. The magnet yoke 23 is formed from an iron material having magnetism. Also the magnet yoke 23 has a plated layer of a material such as copper or solder to which solder sticks well. The magnet yoke 23 is fixed to the optical pickup base plate 22 by soldering or adhesion. It is to be noted that, where adhesion is used for the fixation, such copper plating or solder plating is unnecessary. The optical pickup base plate 22 has a drawn portion 52 which is used for fixation to the collimator lens actuator section as well.

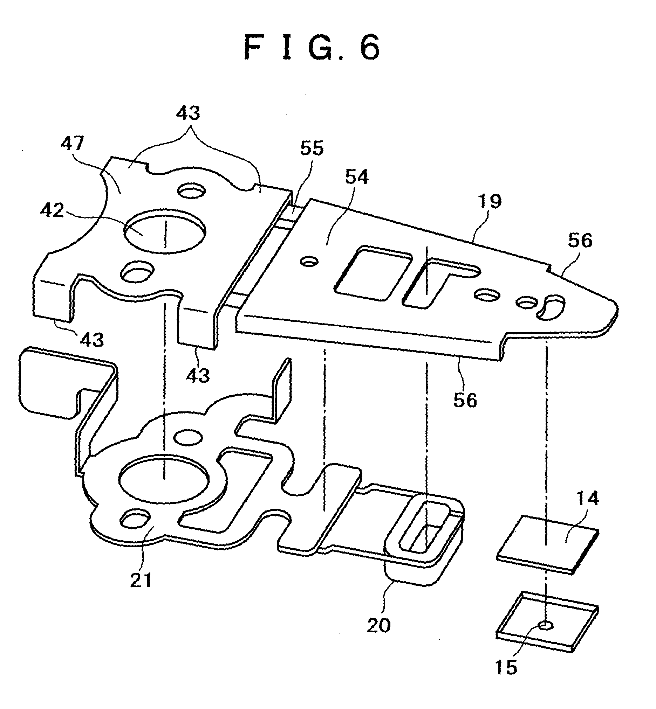

Now, the collimator lens actuator section shown in FIG. 6 is described.

The support spring 19 is composed of three parts including a support spring mounting portion 47, a support spring load beam 54, and a leaf spring 55 for connecting the support spring mounting portion 47 and the support spring load beam 54 to each other. The support spring mounting portion 47 is formed from a metal plate of an iron type or a copper type of a thickness of approximately 0.3 mm or less. The support spring mounting portion 47 has four pawls (bent portions) 43 to be soldered for fixation to the optical pickup base plate 22. Where the support spring mounting portion 47 is made of an iron type material, at least the pawls 43 thereof have a plated layer of copper or solder thereon. Also the support spring load beam 54 is formed from a metal plate of an iron type or a copper type of a thickness of approximately 0.3 mm or less.

The leaf spring 55 is formed from a thin spring member of an iron type material or a copper type material of a thickness of 0.1 mm or less and is fixed by point welding to the support spring mounting portion 47 and the support spring load beam 54. The support spring load beam 54 can be moved upwardly and downwardly through the leaf spring 55. The support spring load beam 54 has two ribs (bent portions) 56 provided thereon. The ribs 56 project to a height greater than the total thickness of optical parts existing within the range from the support spring load beam to the optical pickup base plate and assures the rigidity of the support spring load beam 54. Further, the ribs 56 function as a stopper to the downward movement of the optical pickup base plate 22 by collision between the optical pickup base plate 22 and the ribs 56. The stopper function protects the two optical parts (glass cover 16 with a concave lens and collimator lens 15) against damage by collision.

A quarter-wave plate 14 and the collimator lens 15 are pasted in an overlapping relationship with each other to a free end portion of the support spring load beam 54. In the present embodiment, the quarter-wave plate 14 has a size of approximately 3 mm wide $\times$ 3 mm long $\times$ 0.1 mm thick. The collimator lens 15 has an outer profile of a size of approximately 3 mm wide $\times$ 3 mm long $\times$ 0.3 mm thick, and a lens portion substantially at the center of the collimator lens 15 has a diameter of approximately 0.5 mm. A method of producing the lens and the functions of the optical parts are hereinafter described.

The driving coil 20 is adhesively fixed to the support spring load beam 54 and cooperates with the magnetic circuit attached to the optical pickup base plate 22 to form a voice coil motor. The support spring load beam 54 can be driven upwardly and downwardly by the voice coil motor. Naturally, the support spring load beam 54 function as an actuator for moving the collimator lens 15 upwardly and downwardly. The driving coil 20 is electrically connected to the electric circuit board 11 through a flexible substrate 21. The flexible substrate 21 is used not only for connection of the driving coil 20 but also for connection of a coil bobbin unit 32 for driving the swing arm unit 5 to the electric circuit board 11.

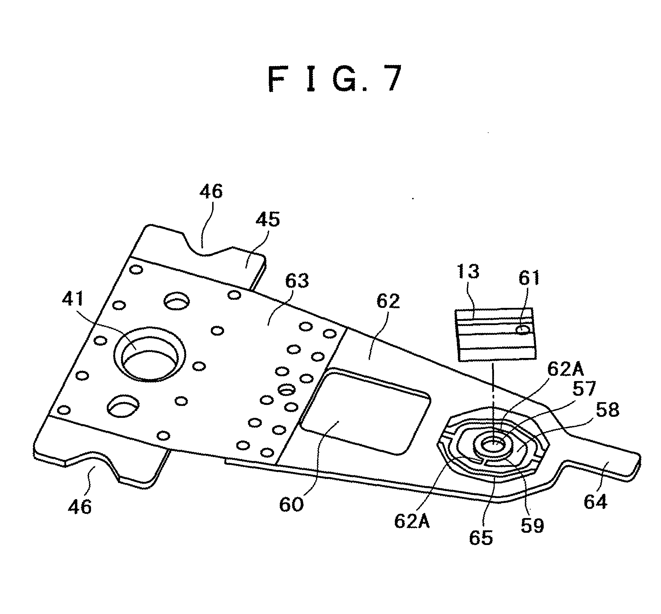

Now, a configuration of the slider suspension section shown in FIG. 7 is described.

The slider suspension section is formed from the suspension 18 and the floating slider 13 with an objective lens. The suspension 18 is composed of three parts including a suspension mounting portion 45, a suspension load beam 62 and a leaf spring 63 for connecting the suspension mounting portion 45 and the suspension load beam 62 to each other. The suspension mounting portion 45 is made of a metal plate of an iron type or copper type of a thickness of approximately 0.3 mm or less. An embossed portion burred downwardly in FIG. 7 is provided at a central portion of the suspension mounting portion 45 and used for fixation by caulking or welding to a hole 42 of the support spring mounting portion 47.

A pair of cutaway portions 46 are formed on different portions of the suspension mounting portion 45 and are used for clamping of the suspension mounting portion 45 from the opposite sides by means of pins of a jig when the suspension mounting portion 45 is to be adjusted and fixed to the optical pickup base plate 22 after it is assembled to the collimator lens actuator section. Also the suspension load beam 62 is formed from a metal plate of an iron type or a copper type of a thickness of approximately 0.3 mm or less. The leaf spring 63 is formed from a thin spring member of an iron type material or a copper type material of a thickness of approximately 0.1 mm or less and is fixed to the suspension mounting portion 45 and the suspension load beam 62 by point welding. The suspension load beam 62 is movable upwardly and downwardly around the leaf spring 63. The leaf spring 63 is curved in advance so that, when the optical pickup is in a used state, the floating slider 13 with an objective lens may exert pressing force of approximately 5 gf or less against the disk.

The floating slider 13 with an objective lens is fixedly adhered to the suspension load beam 62. The floating slider 13 with an objective lens is fixed by placing it from the upper side in FIG. 7 such that the center thereof coincides just with a bonding hole 57, supplying a bonding agent into the bonding hole 57 from the rear face side and leaving the bonding agent to cure. It is to be noted that, absent the bonding hole 57, two faces are adhered to each other and the bonding agent will protrude. The protruding bonding agent may possibly interfere with the path of light which is to pass through the floating slider 13 with an objective lens. In the present embodiment, however, the bonded portion is surrounded and no bonding agent protrudes.

The floating slider 13 with an objective lens is formed from a glass member of a size of approximately 2.8 mm wide $\times$ 2 mm long $\times$ 0.6 mm thick, and an air bearing rail similar to that of a floating slider of a hard disk drive is formed on an upper face in FIG. 7 of the floating slider 13 with an objective lens. An air bearing is formed between the face of the rail and the surface of the disk so that the floating slider 13 with an objective lens functions as a floating slider (flying head). In the present embodiment, the floating slider 13 with an objective lens is designed such that it flies with a floating amount of approximately 0.1 to 1 $\mu$m although it depends upon the linear velocity of the disk.

An objective lens 61 produced by a method hereinafter described is embedded in the floating slider 13 with an objective lens. Two hinge springs 62A (bidirectional torsion hinges) which can absorb inclinations of the slider in the roll direction and the pitch direction, called flecture, are formed around a bonded portion 59. The hinge springs 62A are formed by etching and half etching from the suspension load beam 62.

When the optical pickup functions, a laser beam is introduced from the lower side in FIG. 7 and enters the objective lens 61 through a gap 58 of the hinge springs 62A.

In the present embodiment, the floating slider 13 with an objective lens can be attached with a skew angle of approximately ±20 degrees in the maximum although it depends upon the position of the objective lens. The skew angle here is an angle defined by the longitudinal direction of the suspension and the longitudinal direction of the slider, and if they are parallel to each other, then the skew angle is 0 degree. In order that light passing through the gap 58 of the hinge springs 62A may not hit the bonded portion 59 even if a skew angle is provided, the bonded portion 59 is formed so as to have a circular outer profile except the hinged portions.

Further, half-etched portions 65 similar to the hinged portions are provided on the opposite sides of the hinge springs 62A. The half-etched portions 65 function as a stopper which stops, when the floating slider 13 with an objective lens is acted upon by downward force in FIG. 7 by a disturbance, collision or the like, the floating slider 13 with an objective lens so that the hinge springs 62A may not be plastically deformed.

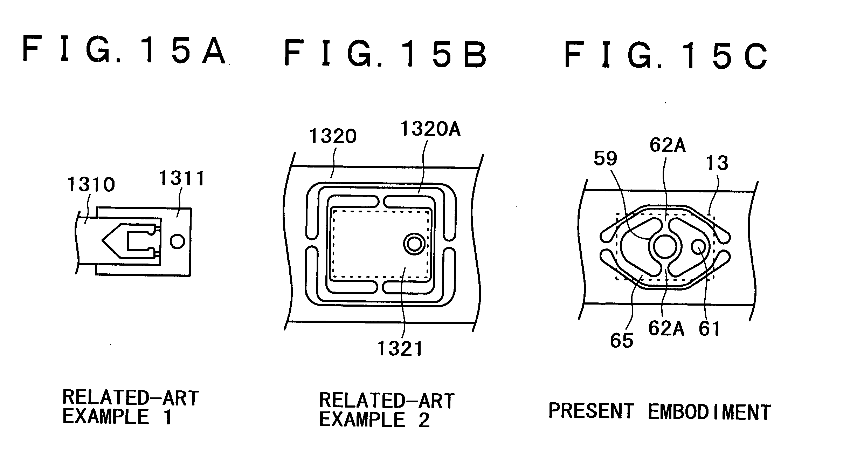

FIGS. 15A to 15C show the hinge spring in the present embodiment in contrast with related-art hinge springs.

FIG. 15A shows a related-art hinge spring 1 of a hinge spring configuration which is popular in hard disk drives and so forth. The related-art example 1 has a structure wherein a hinge spring 1310 is connected at an end portion thereof to a slider 1311. Although the related-art example 1 is small in size, since the hinge spring is supported in a cantilever structure from the left side in FIG. 15A, mechanical resonance in the tracking direction is low. Further, since face-to-face adhesion is used, protruding bonding agent may possibly interfere with the path of light.

FIG. 15B shows a related-art example 2 wherein a slider 1321 is supported from the opposite sides thereof in a leftwardly and rightwardly symmetrical structure by a hinge spring 1320 on which an intermediate ring portion 1320A is provided. Accordingly, while the mechanical resonance of the related-art example 2 is higher than that of the related-art example 1, depending upon the size of the slider, the rigidity of the hinge portion (particularly the intermediate ring portion) cannot be raised as the hinge spring is great, and the mechanical resonance sometimes restricts the servo performance. Furthermore, since face-to-face adhesion is used and a hole is perforated only at a portion through which a light path extends, the possibility that the light path may be disturbed by protruding bonding agent is the highest.

FIG. 15C shows the hinge spring according to the present embodiment. The hinge spring according to the present embodiment uses a double-sided supporting structure similarly as in the related-art example 2 of FIG. 15B, and the hinge springs 62A are formed in a small size. Consequently, the mechanical resonance is highest with the hinge spring according to the present embodiment. Further, there is no possibility that protruding bonding agent may disturb the path of light. Further, the hinge spring according to the present embodiment allows attachment with a skew angle.

Referring back to FIG. 7, a lifter portion 64 is provided at a tip end of the suspension load beam 62. It is described hereinabove with reference to FIG. 1 that, when the optical disk 1 is not loaded in the drive or the spindle motor 3 is inactive, the optical pickup 8 stands by on the outer side farther than the outer periphery of the disk. The lifter portion 64 is used to cooperate with the spring retainer 9 to retract the floating slider 13 with an objective lens from the face of the disk or place the floating slider 13 with an objective lens onto the face of the disk upon the movement of the optical pickup 8 to and from the standby position. The suspension load beam 62 has a hole 60 perforated at a central portion thereof. As can be seen also from FIG. 2, the magnetic circuit attached to the optical pickup base plate 22 is inserted into the hole 60.

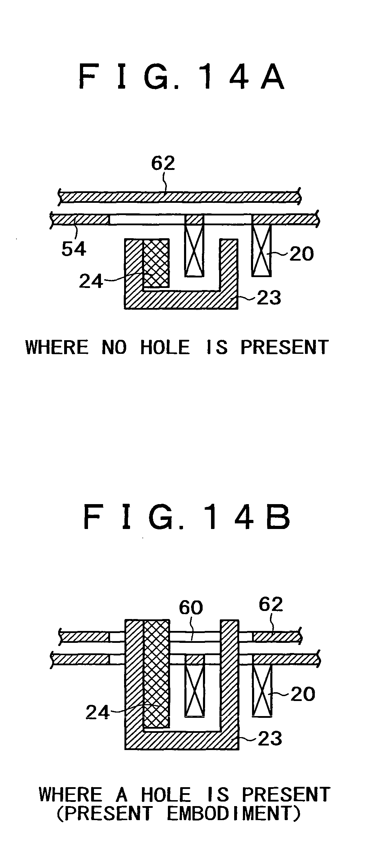

Now, an effect presented by the hole 60 is described. FIGS. 14A and 14B illustrate a difference arising from the presence and the absence of the hole 60. It is to be noted that, for the simplified illustration and description, the same reference numerals are used in FIGS. 14A and 14B.

The hole 60 first exhibits an effect that it increases the vertical length of the magnetic circuit formed from the magnet 24 and the magnet yoke 23. As described hereinabove, when the optical pickup 8 is not used, it stands by on the outer side farther than the outer periphery of the disk. In this instance, in order to move the slider section away from the optical disk 1 in the heightwise direction, the suspension load beam 62 is pushed in the downward direction in FIG. 14A or 14B. Therefore, where the hole is not present, then a gap for the upward and downward stroke of the suspension load beam 62 must be assured above the magnetic circuit. Consequently, a sufficient length of the magnetic circuit cannot be assured for the driving coil 20.

In contrast, where the hole is present as in the present embodiment, there is no necessity to assure a gap for the upward and downward stroke of the suspension load beam 62 above the magnetic circuit, and a magnetic circuit of a sufficient length can be assured for the driving coil 20. Consequently, the thrust of the driving coil 20 can be increased and besides the variation in thrust when the collimator lens actuator section moves upwardly and downwardly can be suppressed to a small amount.

The individual component units are such as described above. Now, a configuration of the entire assembly is described with reference to FIGS. 3 and 4.

The slider suspension section and the collimator lens actuator section are fixed to each other by caulking or welding while an embossed portion 41 provided on the suspension mounting portion 45 is inserted in the hole 42. The outer diameter of the embossed portion 41 and the inner diameter of the hole 42 before the caulking or welding provide a mating gap of approximately 10 μm or less. After the slider suspension section and the collimator lens actuator section are assembled to each other, they are clamped at the two cutaway portions 46 of the suspension mounting portion 45 and adjusted in regard to the XYZ axes and the inclination on the adjusting jig and then fixed to the optical pickup base plate 22. The fixation to the optical pickup base plate 22 is performed by filling solder into the gaps between the four pawls 43 provided on the support spring mounting portion 47 and four projections 44 provided on the optical pickup base plate 22. Further, also the gap between the drawn portion 52 of the optical pickup base plate 22 and the embossed portion 41 of the suspension mounting portion 45 is filled with solder in order to raise the rigidity. While bonding agent may be used instead of the filling method with solder, the soldering is adopted in order to raise the rigidity, to assure the reliability against displacement by temperature, to assure grounding and so forth.

Further, a plated layer of copper, solder or the like to which solder sticks well is provided in advance on the support spring mounting portion 47 and the optical pickup base plate 22. The fixation of the slider suspension section and the collimator lens actuator section must be such as to sufficiently withstand the heat upon soldering. This is the reason why caulking or welding is used.

Now, a method of producing a small-size lens used in the present embodiment is described.

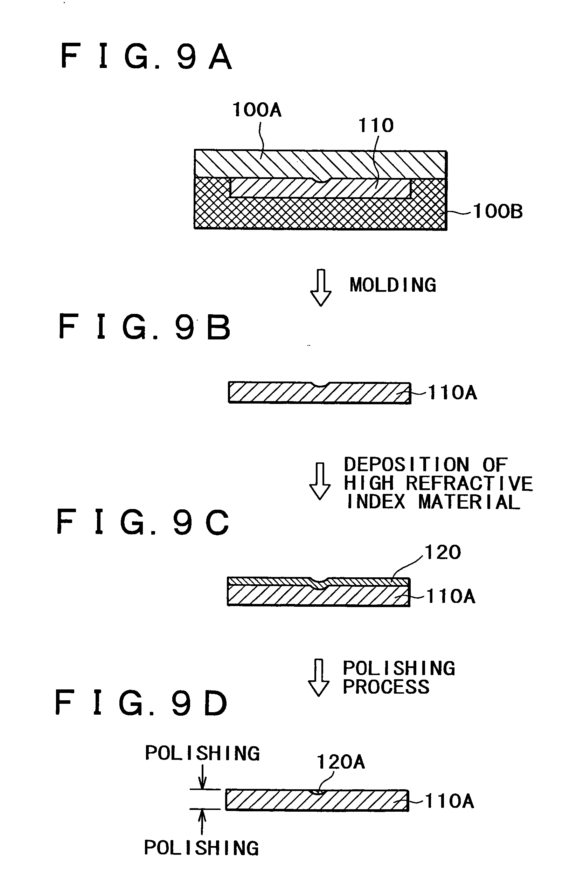

FIGS. 9A to 9D illustrate a method of producing a small-size lens. The method uses an existing technique for producing a small-size lens called mold process lens.

Similarly as in popular production of a lens by glass molding, a concave lens 110A is formed from a glass plate 110 using upper and lower metal molds 100A and 100B. When it is tried to produce a small-size mold lens, conventionally there is a limitation in size of a cutting tool for working a metal mold, and this is a restriction to miniaturization of a small-size lens. However, one of the metal molds has a convex formation so that it may not be restricted by the size of a cutting tool for working, and consequently, a small-size lens can be produced. Then, a material 120 having a higher refractive index than glass such as niobium oxide is deposited by sputtering into a layer of a thickness sufficient to fill up the recess of the formed glass plate.

Thereafter, polishing of the high refractive index material 120 is performed until it remains only in the recess of the glass. Thereupon, also the glass face side is polished to adjust also the thickness of the glass plate. The high refractive index material portion produced by the process described above functions as a convex lens 120A for light to pass through the glass plate. The collimator lens 15 is produced by such a manner as described above.

In the floating slider 13 with an objective lens, after a lens is produced similarly, a glass plate is applied to the flat face of the lens. A rail face configuration for a floating slider is formed on the outer face of the applied glass plate by dry etching such as ion milling. Finally, the floating slider 13 with an objective lens is cut out into the shape of a slider as a completed part. For the glass plate with a concave lens, the glass produced by the process described hereinabove with reference to FIGS. 9A to 9D is used.

Now, the optical system of the optical pickup of the present embodiment is described.

FIG. 8 illustrates a principle of the optical system used in the present embodiment. Referring to FIG. 8, a linearly polarized laser beam emitted from the semiconductor laser 27 is reflected to an upward direction in FIG. 8 by a 45-degfree face of the beam splitter 28. The laser beam is introduced into the collimator lens 15 after the angle of divergence thereof is increased by the concave lens 53. The distance between the collimator lens 15 and the glass cover 16 with a concave lens can be reduced by increasing the divergence angle of the laser beam by means of the concave lens 53, and this contributes to reduction in thickness of the optical pickup.

Further, the numerical aperture of the collimator lens 15 can be raised, and where the upward and downward stroke of the collimator lens 15 is equal, the focal position can be corrected over an increased amount. The laser beam is converted into parallel light by the collimator lens 15 and then passes through the quarter-wave plate 14. Thereupon, the polarization of the laser beam changes from linear polarization into circular polarization. Then, the laser beam is condensed by the objective lens 61 and passes through the slider made of glass and then is focused on a recording face of the optical disk 1. The light reflected from the recording face of the optical disk 1 returns along a similar path of light and is converted back into parallel light by the objective lens 61.

Thereafter, the light passes through the quarter-wave plate 14 again, and thereupon, the polarization thereof is converted reversely from circular polarization into linear polarization. The linear polarization of the light in this instance is different from that of the formerly forwardly advancing laser beam in that the polarization plane now is perpendicular to the former polarization plane, and the resulting light having the perpendicular polarization plane can pass through the 45-degree face of the beam splitter 28. The light thus passing through the 45-degree face of the beam splitter 28 is refracted by the refractive index of the glass and projected on a photo-detector 29 as seen in FIG. 8. Further, the light is reflected there and then further reflected by the upper face of the beam splitter 28 so that it is projected on a photo-detector 30. The optical system described is designed so that, when the focus thereof is adjusted just to the recording face of the disk, the light is focused by the reflection at the upper face of the beam splitter 28. At this time, the amounts of light projected on the two photo-detectors 29 and 30 are equal to each other. Each of the photo-detectors 29 and 30 has a light receiving face divided into four regions so that they can be used also for error correction in focusing and tracking. It is to be noted that, as an error detection method used in the present embodiment, a spot size method is used for focusing and a push-pull method is used for tracking.

Now, the tracking servo and the focusing servo of the optical pickup of the present embodiment are described.

First, for the tracking servo, a method of driving a swing arm by means of a voice coil motor is used. This is a popular driving method used widely in hard disk drives. Meanwhile, for the focusing servo, disk surface vibration follow-up by a floating slider which is used popularly in hard disk drives is used. When the optical disk 1 rotates, also the air in the proximity of the optical disk 1 rotates together and enters a gap between the floating slider 13 with an objective lens and the optical disk 1. The floating slider 13 with an objective lens receives floating force from the pressure of the air and keeps a fixed flowing amount where the floating force balances with the load of the suspension 18. In the present embodiment, the floating amount is designed to approximately 0.1 to 1 μm.

However, variation of the linear velocity of the disk, angular displacement of the slider with respect to the track, surface vibration of the disk and so forth vary the floating amount of the floating slider 13 with an objective lens and hence vary the focal position reduced by the objective lens. Also the accuracy in focal position of the objective lens itself or the mechanical accuracy of the slider section makes a factor of the displacement of the focal position. Furthermore, the data recording layer is not the surface of the disk but is covered with a cover coating layer (protective layer). Consequently, when a signal is recorded/reproduced, also the error in thickness of the cover coating layer makes a factor of causing an out-of-focus state to occur.

The cover coating layer is provided not only for the protection of the data recording layer, but also for a function of causing a recording/reproduction error less likely to occur from a foreign article or damage on the surface of the disk, and is essentially required for the optical disk. The cover coat layer is produced, in the present embodiment, with a thickness of approximately 20 μm by spin coating. Although it depends upon the disk diameter, unevenness in thickness of approximately 5 to 10 μm or less appears in inner and outer circumferences of the disk. Even within one circumference, unevenness in thickness of approximately 1 μm or less appears. If the sum total of the various focus errors remains within the focal depth of the laser spot, then only the floating slider can be used for the focusing servo. This, however, is impossible (even the focal depth of the optical system for a CD is ±1 μm). Accordingly, another countermeasure for correcting the focal errors is required, and this is the collimator lens actuator in the present embodiment.

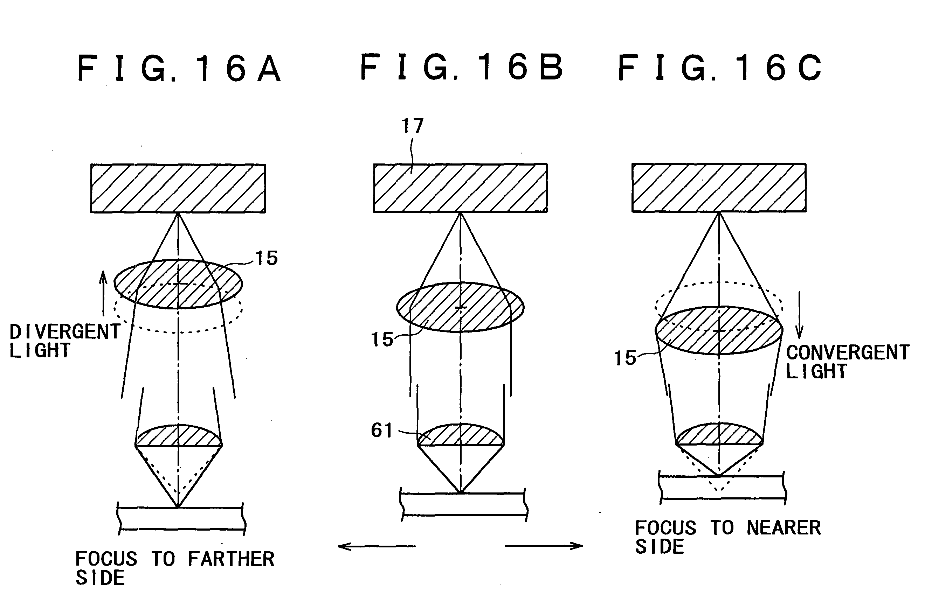

FIGS. 16A to 16C illustrate a principle of the collimator lens actuator in the present embodiment.

The collimator lens actuator can move the focal position at which light is condensed by the objective lens 61 by moving the collimator lens 15 in the direction of the optical axis with respect to the integrated optical pickup unit 17. The amount of movement of the focal position depends upon the numerical aperture of the objective lens 61 and the numerical aperture of the collimator lens 15. In the present embodiment, the numerical aperture of the objective lens 61 is approximately 0.9 and the numerical aperture of the collimator lens 15 is approximately 0.3. Where the amount of movement of the focal position is calculated based on the values, in order to move the focal position by 1 μm, the amount of movement of the collimator lens 15 is approximately 8 μm. If the stroke of the collimator lens 15 is assured by approximately ±160 μm, then the focal position can be moved by approximately by ±20 μm.

Now, the optical pickup of the present embodiment is described in contrast with the related-art optical pickups described hereinabove with reference to FIGS. 17 and 18.

As described hereinabove, the optical pickups shown in FIGS. 17 and 18 have problems that the movable stroke of the focal position in the focusing servo is small and that a high cost is required. However, with the optical pickup of the present embodiment, voice coil motor driving is used for the focusing servo, and also the cost is low, and besides the focal position can be moved by a great movable stroke. In addition, the optical pickup of the present embodiment is suitable also for the high frequency band servo. It is to be noted that, according to the standards for DVDs, also a two-recording-layer disk is defined, and the distance between the two layers is approximately 20 μm. In this regard, while the movable stroke of the focal position of the related-art optical pickups is ±3 to 4 μm or less at the most, a movable stroke of ±20 μm or more can be achieved in principle by the optical pickup of the present embodiment. This signifies that the optical pickup of the present embodiment is ready for such a two-layer disk as described above.

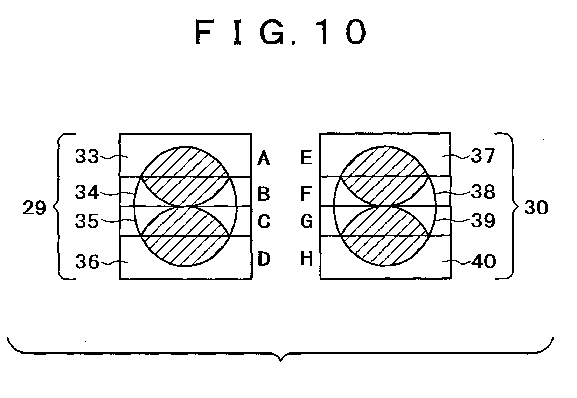

FIG. 10 shows a light receiving region pattern of the photo-detectors 29 and 30.

Referring to FIG. 10, the light receiving region of each of the two photo-detectors 29 and 30 is divided into four regions, which are defined as regions A to H (33 to 40) as seen in FIG. 10. A circular form drawn at a middle portion of each of the photo-detectors 29 and 30 is a spot of returning light projected on the photo-detector. It is to be noted that, although the spot is shown as a circular spot, actually it has an elliptical shape. Actually, the spot on the photo-detector 29 has a horizontally elongated elliptical shape while the spot on the photo-detector 30 has a vertically elongated elliptical shape. Further, each of the circular spots has two dark shadowed portions therein. The shadows are produced by interference of 0th order diffracted light with first order diffracted light by a pit on the disk. The amount of light on each photo-detector varies depending upon whether or not shadows are present, and a signal can be reproduced based on the light amount. The shadows are used also for production of a tracking error signal.

Where the spots of returning light have such patterns as seen in FIG. 10, the tracking error signal is produced using a push-pull method and can be calculated in accordance with an expression of (A + B + G + H) - (C + D + E + F). Here, the characters A to H signify the amounts of received light by the divisional regions of the photo-detectors. Incidentally, the focusing error signal is obtained using a spot size method, and the calculation expression therefor is represented by (A + D + F + G) - (B + C + E + H).

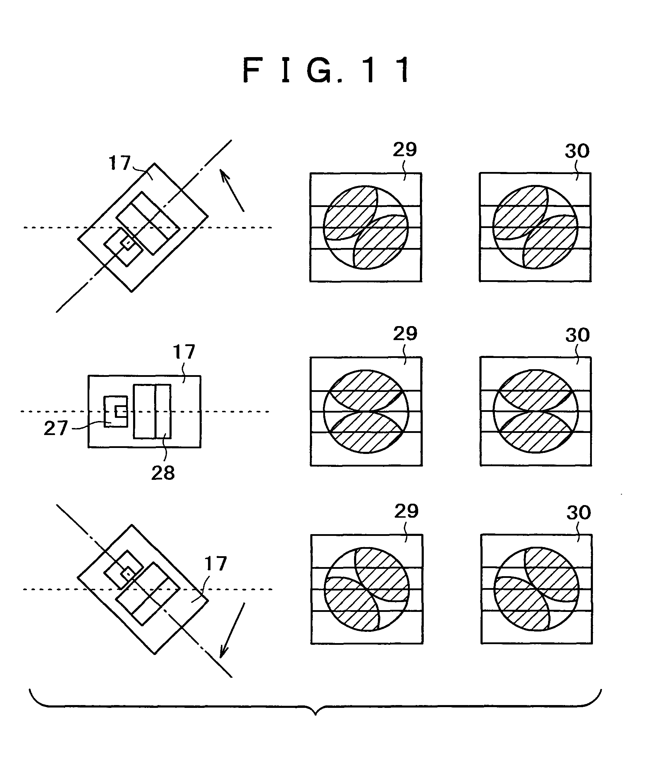

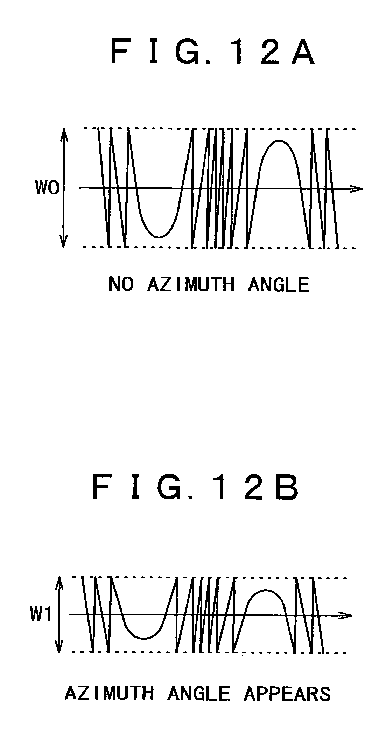

Since the optical pickup of the present embodiment is of the swing arm type, when it accesses from an inner circumference to an outer circumference, an azimuth angle appears with respect to the recording track. Variations of the spot shapes on the photo-detectors when an azimuth angle appears can be seen from FIG. 11. If an azimuth angle appears, then the tracking error signal calculated with the expression given above exhibits a decrease of the amplitude W from W0 to W1 as seen from FIGS. 12A and 12B. That the amplitude of the tracking error exhibits a lower value depending upon the place being accessed signifies that the sensitivity of the tracking error signal decreases. Also the S/N (Signal/Noise) ratio of the signal is deteriorated. This signifies that, as the azimuth angle increases, the tracking servo performance deteriorates.

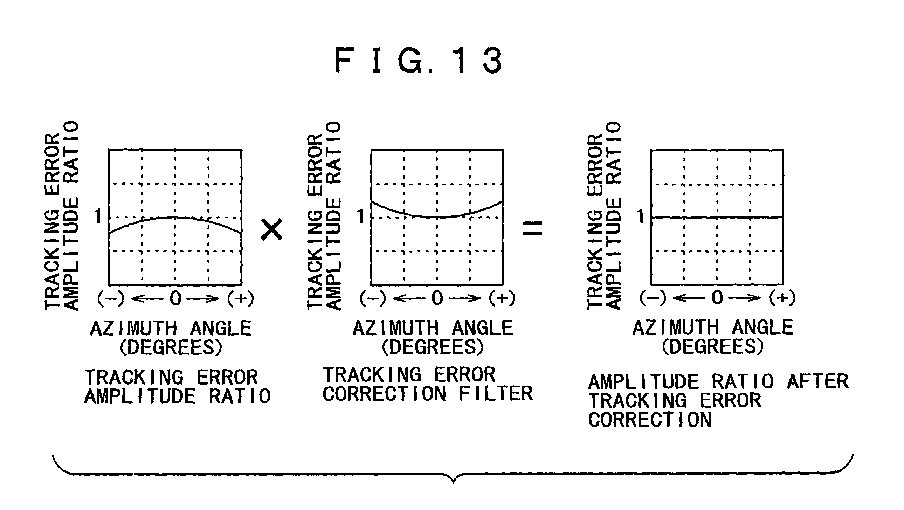

Therefore, in the present embodiment, the integrated optical pickup unit 17 is disposed in an inclined relationship in advance so that the azimuth angle may be degree substantially at the center (= middle circumference) of the access area in order to minimize the azimuth angle to appear. Furthermore, arithmetic operation of a correction filter is used so that, when an azimuth angle appears, the deterioration of the tracking error amplitude may be compensated for as seen in FIG. 13. The correction filter is represented by an azimuth angle on the axis of abscissa and a magnification of the amplitude on the axis of the ordinate. The correction filter graph is determined through actual measurement.

After the arithmetic operation of the correction filter, the amplitude of the tracking error is fixed independently of the azimuth angle. The relationship between the azimuth angle to appear and the position of the optical pickup (the radius R of the disk) is represented by the following expression:

$$\text{Azimuth angle (radian)} = \sin^{-1}\left(\frac{X^2 - (R^2 + A^2)}{2RA}\right)$$

where A is the radius (mm) of rotation of the optical spot, R the radius (mm) of the disk, and X the distance (mm) between the axis of the swing arm and the axis of rotation of the disk.

Here, A and X are values determined in advance in design. Meanwhile, R can be known from an address signal read from the disk. As a result, if an address signal is read from the disk, then the correction magnification for the tracking error can be determined and the arithmetic operation for correction can be performed. Also the focusing error signal is corrected by a similar method since it suffers from similar signal deterioration by an azimuth angle.

While a preferred embodiment of the present invention has been described using specific terms, such description is for illustrative purposes only, and it is to be understood that changes and variations may be made without departing from the spirit or scope of the following claims.

**Claims**

**1.** An optical pickup apparatus comprising:

an integrated optical pickup unit (17) for recording or reproducing a signal on or from an optical disk (1), said integrated optical pickup unit including a semiconductor laser for emitting a light beam and an optical system for introducing the light beam; and
a swing arm unit (5) for supporting said integrated optical pickup unit (17);
said swing arm unit including an optical pickup base plate (22) formed from a thin metal plate having a hole for arrangement of said integrated optical pickup unit (17) formed at an end portion thereof, a semiconductor substrate having said integrated optical pickup unit (17) mounted thereon and mounted on one of faces of said optical pickup base plate (22) to close up said hole of said optical pickup base plate (22), and a transparent cover (16) mounted on the other face of said optical pickup base plate (22) to close up said hole;

said integrated optical pickup unit (17) on said semiconductor substrate being disposed in a space formed in said hole of said optical pickup base plate (22) closed up with said semiconductor substrate and said transparent cover (16).

2. An optical pickup apparatus according to claim 1, wherein said optical pickup base plate (22) is formed from a thin plate of an iron alloy or a copper alloy.

3. An optical pickup apparatus according to claim 1, wherein said transparent cover (16) has a function as an optical part, and said optical pickup base plate (22) has thereon a plated layer whose thickness is controlled so as to adjust the position of said transparent cover (16).

4. An optical pickup apparatus according to claim 3, wherein the plated layer on said optical pickup base plate (22) allows sticking of solder thereto.

5. An optical pickup apparatus according to claim 4, wherein the plated layer which allows sticking of solder thereto is a plated copper layer or a plated solder layer.

6. An optical pickup apparatus according to claim 1, wherein said integrated optical pickup unit (17) is disposed in an inclined relationship by a predetermined inclination angle in a direction from the center of rotation to a tip end of said swing arm unit (5), the predetermined inclination angle being set such that an azimuth angle with respect to recording track substantially at the center of an optical pickup access area of the optical disk is 0 degree or an angle proximate to 0 degree.

7. An optical pickup apparatus according to claim 6, further comprising a compensator for compensating for the amplitude of a tracking error signal so as to be fixed irrespective of a variation of the azimuth angle.

8. An optical pickup apparatus according to claim 6, further comprising a compensator for compensating for the amplitude of a focusing error signal so as to be fixed irrespective of a variation of the azimuth angle.

9. An optical disk apparatus comprising an optical pickup apparatus according to any one of claims 1 to 8 and further comprising:

an optical disk driving unit for holding and driving the optical disk to rotate.

10. An optical disk apparatus comprising:

an optical pickup (8) for illuminating a light beam upon an optical disk (1) to record or reproduce a signal on or from the optical disk (1); and
a swing arm unit (5) for supporting said optical pickup (8);
said swing arm unit (5) including an optical pickup base plate (22) for holding an integrated optical pickup unit (17) including a semiconductor laser (27) and an optical system, a plate-like support spring (19) disposed in parallel to and along a face of said optical pickup base plate (22) adjacent the optical disk (1), and a suspension (18) disposed in parallel to and along a face of said support spring adjacent the optical disk;
said integrated optical pickup unit (17) including a concave lens (53) for increasing the diversion angle of the laser beam emitted from said optical pickup (8);
said support spring (19) including a collimator lens (15) for converting the laser beam from the concave lens (53) into parallel light,
said suspension (18) including a floating slider (13) in which an objective lens (61) for condensing the laser light from said collimator lens (15) on the optical disk (1) is incorporated.

11. An optical disk apparatus according to claim 10, further comprising a collimator lens actuator for driving said support spring (19) to move said collimator lens (15).

12. An optical disk apparatus according to claim 11, wherein said collimator lens actuator includes a driving coil (20) and a magnetic circuit (23, 24).

13. An optical disk apparatus according to claim 11, wherein said support spring (19) includes a load beam (54) having said collimator lens (15) attached to a tip end portion thereof, said load beam (54) having a stopper (56) projecting higher than the total thickness of optical parts existing between said load beam (54) and said optical pickup base plate (22).

14. An optical disk apparatus according to claim 12, wherein said suspension (18) has a hole (60) perforated therein through which said magnetic circuit is to pass.

15. An optical disk apparatus according to claim 10, wherein said suspension (18) has a hole formed therein which allows bonding agent to be applied therethrough from the opposite face side to the attaching face of said floating slider (13) to which said floating slider (13) is to be attached when said floating slider (13) is to be fixed to said suspension (18).

16. An optical disk apparatus according to claim 10, wherein said suspension (18) includes a flecture for absorbing a movement of said floating slider (13) in roll and pitch directions by means of two twisted hinge portions in two directions disposed symmetrically with respect to the center of said floating slider (13) and has a gap for passing light from said optical pickup (8) therethrough between an adhered portion of said floating slider (13) and said hinge portions.

17. An optical disk apparatus according to claim 10, wherein said suspension (18), said support spring (19) and said optical pickup base plate (22) are made of a material of the same type.

18. An optical disk apparatus according to claim 17, wherein the material is an iron alloy or a copper alloy.

19. An optical disk apparatus according to claim 10, wherein said suspension (18) and said support spring (19) are joined into an assembly part by caulking or welding, and said assembly part is joined to said optical pickup base plate (22) by soldering.

20. An optical disk apparatus according to claim 10, wherein said floating slider (13) has a plurality of cutaway portions (46) provided at a mounting portion thereof at which said floating slider (13) is fixed to said suspension (18) and serving as portions to be clamped for adjustment.

21. An optical disk apparatus according to claim 10, wherein said integrated optical pickup unit (17) is disposed in an inclined relationship by a predetermined inclination angle in a direction from the center of rotation to a tip end of said swing arm unit (5), the predetermined inclination angle being set such that an azimuth angle with respect to recording track substantially at the center of an optical pickup access area of the optical disk is 0 degree or an angle proximate to 0 degree.

22. An optical disk apparatus according to claim 21, further comprising a compensator for compensating for the amplitude of a tracking error signal so as to be fixed irrespective of a variation of the azimuth angle.

23. An optical disk apparatus according to claim 21, further comprising a compensator for compensating for the amplitude of a focusing error signal so as to be fixed irrespective of a variation of the azimuth angle.

24. An optical disk apparatus comprising:

an optical pickup (8) for illuminating a light beam upon an optical disk (1) to record or reproduce a signal on or from the optical disk (1);
a moving unit for moving said optical pickup along a signal recording face of the optical disk; and
a flexible substrate (25) for supplying a signal to said optical pickup;
said flexible substrate (25) having a wiring pattern wherein signal lines necessary for operation of said optical pickup (8) and signal lines necessary only for adjustment of said optical pickup (8) are disposed separately from each other.

25. An optical disk apparatus according to claim 24, wherein the signal lines on said flexible substrate (25) which are necessary only for adjustment of said optical pickup (8) are cut after completion of attachment and adjustment of said optical pickup (8).

**26.** An optical disk apparatus according to claim 24, wherein said optical pickup (8) includes a semiconductor substrate on which an integrated optical pickup unit (17) including a semiconductor laser (27) and an optical system is mounted, and a floating slider (13) in which an objective lens (61) is incorporated, and said moving unit includes a swing arm unit (5) which holds said semiconductor substrate and said floating slider (13) thereon.

**27.** An optical disk apparatus according to claim 24, wherein the signal lines, on said flexible substrate (25), which are necessary for operation of said optical pickup (8) include a signal line for transmitting a detection signal of a detector included in said optical pickup (8) for detecting the light beam to a control circuit on an apparatus body side.

**28.** An optical disk apparatus according to claim 24, wherein the signal lines, on said flexible substrate (25), which are necessary for operation of said optical pickup (8) include a signal line for supplying a data signal to be recorded on the optical disk (1) to said optical pickup (8).

**29.** An optical disk apparatus according to claim 24, wherein the signal lines, on said flexible substrate (25), which are necessary for operation of said optical pickup (8) include a signal line for supplying driving power to said optical pickup.

**30.** An optical pickup adjustment method for an optical disk apparatus which includes an optical pickup (8) for illuminating a light beam upon an optical disk (1) to record or reproduce a signal on or from the optical disk (1), a moving unit for moving said optical pickup (8) along a signal recording face of the optical disk (1), and a flexible substrate (25) for supplying a signal to said optical pickup (8), said optical pickup adjustment method comprising the steps of:

providing, on said flexible substrate (25), a wiring pattern wherein signal lines necessary for operation of said optical pickup (8) and signal lines necessary only for adjustment of said optical pickup (8) are disposed separately from each other;
using the signal lines provided on said flexible substrate (25) and necessary only for adjustment of said optical pickup (8) to transmit signals for adjustment to perform attachment adjustment of said optical pickup (8); and
cutting the wiring pattern of the signal lines necessary only for adjustment of said optical pickup (8) after completion of the adjustment of said optical pickup (8).

**31.** An optical pickup adjustment method according to claim 30, wherein at least some of the signal lines of said flexible substrate (25) are connected to external terminals of said optical disk apparatus, and the signals for adjustment include a signal inputted from an external testing apparatus.

# F I G. 1

# F I G. 2

# F I G. 3

# F I G. 4

# F I G. 5

LEAD PATTERN
FOR SIGNALS
NECESSARY FOR
OPERATION

LEAD PATTERN
FOR SIGNALS FOR
ADJUSTMENT

CUT AFTER
ADJUSTMENT

EP 1 513 141 A2

# F I G. 6

# F I G. 7

# F I G. 8

# FIG. 9A

100A 110 100B

⬇ MOLDING

# FIG. 9B

110A

⬇ DEPOSITION OF HIGH REFRACTIVE INDEX MATERIAL

# FIG. 9C

120 110A

⬇ POLISHING PROCESS

# FIG. 9D

POLISHING 120A 110A POLISHING

# F I G. 1 0

# F I G. 1 1

# F I G. 1 2 A

NO AZIMUTH ANGLE

# F I G. 1 2 B

AZIMUTH ANGLE APPEARS

# F I G. 1 3

TRACKING ERROR
AMPLITUDE RATIO

1

(−) ← 0 → (+)

AZIMUTH ANGLE
(DEGREES)

TRACKING ERROR
AMPLITUDE RATIO

×

TRACKING ERROR
AMPLITUDE RATIO

1

(−) ← 0 → (+)

AZIMUTH ANGLE
(DEGREES)

TRACKING ERROR
CORRECTION FILTER

=

TRACKING ERROR
AMPLITUDE RATIO

1

(−) ← 0 → (+)

AZIMUTH ANGLE
(DEGREES)

AMPLITUDE RATIO AFTER
TRACKING ERROR
CORRECTION

EP 1 513 141 A2

# F I G. 1 4 A

WHERE NO HOLE IS PRESENT

# F I G. 1 4 B

WHERE A HOLE IS PRESENT
(PRESENT EMBODIMENT)

# FIG. 15A  FIG. 15B  FIG. 15C

1310  1311

1320  1320A

59  62A  13

1321

65  62A  61

RELATED-ART
EXAMPLE 1

RELATED-ART
EXAMPLE 2

PRESENT EMBODIMENT

EP 1 513 141 A2

# FIG. 16A    FIG. 16B    FIG. 16C

DIVERGENT
LIGHT

15

FOCUS TO FARTHER
SIDE

17

15

61

15

CONVERGENT
LIGHT

FOCUS TO NEARER
SIDE

EP 1 513 141 A2

# FIG. 17

DISK ROTATION
DIRECTION
1124     1130

1120     1123  ← FLOW OF AIR

1121
COMPRESSION/DECOMPRESSION
DIRECTIONS OF LAMINATED
TYPE PIEZOELECTRIC ELEMENT

1122

1110     1111

DIRECTIONS OF FORCE
GENERATED BY BIMORPH TYPE
PIEZOELECTRIC ELEMENT

EP 1 513 141 A2

# F I G. 1 8